# EUROPEAN PATENT APPLICATION

(11) **EP 4 604 595 A1**
(43) Date of publication of application: **20.08.2025**
(21) Application number: 23886381.5
(22) Date of filing: 03.11.2023
(51) Int. Cl.: H04W 24/02, H04W 8/12, H04W 48/18, H04L 41/14

(54) **METHOD AND DEVICE FOR COLLECTING AND ANALYZING NETWORK DATA RELATED TO POLICY APPLICATION OF TERMINAL IN WIRELESS COMMUNICATION SYSTEM**

(30) Priority: 03.11.2022 KR 20220145638
(71) Applicant: Samsung Electronics Co., Ltd., Suwon-si, Gyeonggi-do 16677 (KR)
(72) Inventor: PARK, Jungshin, Suwon-si, Gyeonggi-do 16677 (KR); SUH, Dongeun, Suwon-si, Gyeonggi-do 16677 (KR)
(74) Representative: Gulde & Partner
(86) International application number: PCT/KR2023/017546
(87) International publication number: WO 2024/096687

(57) **Abstract**

The present disclosure relates to a method and a device for collecting and/or analyzing network data related to application of a user equipment policy in a wireless communication system supporting a roaming service. According to an embodiment of the present disclosure, the method performed by means of a first network entity in a wireless communication system supporting a roaming service of a user equipment from a home network to a visited network comprises the steps of: receiving, from a policy control function (PCF) of the home network, a first request message for collection and analysis of network data related to the application of the user equipment policy; determining data and analysis type for collection and analysis of the network data about the user equipment roaming to the visited network; transmitting, to a second network entity of the visited network, a second request message requesting collection and analytics provision of the network data; receiving, from the second network entity, the network data collected in relation to the application of the user equipment policy and the analytics; and transmitting the network data and the analytics to the PCF.

## Description

### [Technical Field]

The disclosure relates to a wireless communication system, and relates to a method and a device for collecting and/or analyzing data with respect to a roaming terminal in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

To improve network performance and optimize operations in a wireless communication system, a function for collecting and analyzing data related to policy application of a UE within the system may be introduced. An effective method for collecting and analyzing session-related data of a UE is required to analyze a policy applied by a UE to configure a session using a new network slice in a network.

The disclosure provides a method and a device for collecting and/or analyzing network data related to policy application of a UE in a wireless communication system.

In addition, the disclosure provides a method and a device for collecting and/or analyzing network data related to policy application of a UE in a wireless communication system that supports a roaming service.

Furthermore, the disclosure provides a method and a device for providing configuration information for collecting and/or analyzing network data related to policy application of a roaming UE in a wireless communication system.

### [Technical Solution]

According to an embodiment of the disclosure, a method performed by a first network entity in a wireless communication system supporting a roaming service of a UE from a home network to a visited network includes receiving, from a policy control function (PCF) of the home network, a first request message for collection and analysis of network data related to policy application of the UE, determining data and an analysis type for the collection and analysis of the network data for the UE roaming to the visited network, transmitting, to a second network entity of the visited network, a second request message requesting collection of the network data and provision of analytics information, receiving, from the second network entity, the analytics and the network data collected in relation to the policy application for the UE, and transmitting the analytics information and the network data to the PCF.

In addition, according to an embodiment of the disclosure, a first network entity in a wireless communication system supporting a roaming service of a UE from a home network to a visited network includes a transceiver, and a processor configured to receive, from a policy control function (PCF) of the home network via the transceiver, a first request message for collection and analysis of network data related to policy application of the UE, determine data and analysis type for the collection and analysis of the network data for the UE roaming to the visited network, transmit, to a second network entity of the visited network via the transceiver, a second request message requesting collection of the network data and provision of analytics information, receive, from the second network entity via the transceiver, the analytics and the network data collected in relation to the policy application of the UE, and transmit the analytics information and the network data to the PCF via the transceiver.

In addition, according to an embodiment of the disclosure, a method performed by a second network entity of a visited network in a wireless communication system supporting a roaming service of a UE from a home network to the visited network, includes receiving, from a first network entity that has received a first request message for collection and analysis of network data related to policy application of the UE from a policy control function (PCF) of the home network, a second request message requesting collection of the network data and provision of analytics information, and, in response to receiving the second request message, transmitting, to the first network entity, the analytics information and the network data collected in relation to the policy application of the UE.

In addition, according to an embodiment of the disclosure, a second network entity of a visited network in a wireless communication system supporting a roaming service of a UE from a home network to the visited network includes a transceiver, and a processor configured to receive, from a first network entity that has received a first request message for collection and analysis of network data related to policy application of the UE from a policy control function (PCF) of the home network, a second request message requesting collection of the network data and provision of analytics information via the transceiver, and in response to receiving the second request message, transmit, to the first network entity via the transceiver, the analytics information and the network data collected in relation to the policy application of the UE.

### [Brief Description of Drawings]

FIG. 1 illustrates a structure of a wireless communication system according to an embodiment of the disclosure;
FIG. 2 illustrates an example of a configuration of a wireless communication system that supports a roaming service for a UE that has moved from a home network to a visited network according to an embodiment of the disclosure;
FIG. 3 illustrates a procedure for network data collection and analysis for policy application of a roaming UE in a wireless communication system according to an embodiment of the disclosure; and
FIG. 4 illustrates an example of a configuration of a network entity in a wireless communication system according to an embodiment of the disclosure.

### [Mode for Carrying out the Invention]

Hereinafter, embodiments of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

Hereinafter, exemplary embodiments of the disclosure will be described in detail with reference to the accompanying drawings. It should be noted that, in the accompanying drawings, the same or like elements are designated by the same or like reference signs as much as possible. Also, it should be noted that the following accompanying drawings of the disclosure are provided to assist in understanding the disclosure, and the disclosure is not limited to the forms or configurations illustrated in the drawings of the disclosure. Also, a detailed description of known functions or configurations that may make the subject matter of the disclosure unnecessarily unclear will be omitted. It should be noted that in the following description of the disclosure, only parts necessary for understanding operations according to various embodiments of the disclosure will be described and descriptions of the other parts will be omitted so as not to make the subject matter of the disclosure obscure. Furthermore, various embodiments of the disclosure will be described using terms used in some communication standards (e.g., the 3rd generation partnership project (3GPP)), but they are for illustrative purposes only. Various embodiments of the disclosure may be easily applied to other communication systems through modifications.

As used herein, each of such phrases as "A and/or B," "A or B," "at least one of A and B," "at least one of A or B," "A, B, or C," "at least one of A, B, and C," and "at least one of A, B, or C," may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order).

In the following description, terms for identifying access nodes, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, terms and names defined in the 3rd generation partnership project long term evolution (3GPP LTE) standards will be used for the sake of descriptive convenience. However, the disclosure is not limited by these terms and names, and may be applied in the same way to systems that conform other standards.

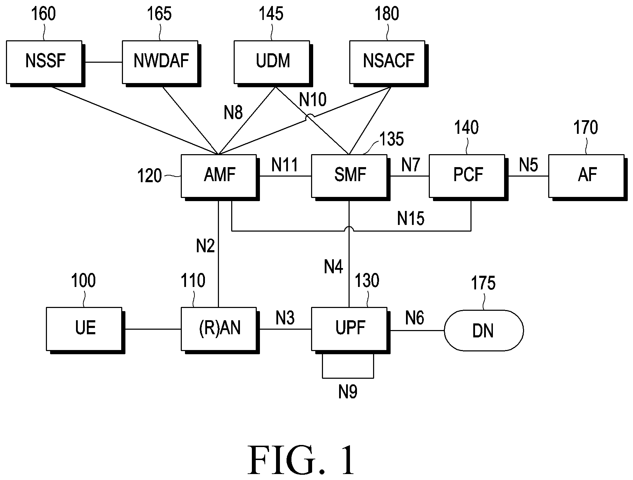

In the disclosure, network technology may refer to standard specifications defined by the International Telecommunication Union (ITU) or 3GPP (e.g., TS 23.501, TS 23.502, TS 23.503, etc.), and components included in the network structure of FIG. 1, described later, may represent a physical entity, or may represent software performing an individual function, or hardware combined with software. Reference symbols shown as Nx, such as N1, N2, N3, ..., in the drawings indicate known interfaces between NFs in a 5G core network (CN).

For convenience of explanation below, the entities that exchange information for access control and state management in a wireless communication system are referred to by the names of network functions (NFs) (e.g., access and mobility management function (AMF), session management function (SMF), network slice selection function (NSSF), etc.). However, the embodiments of the disclosure are equally applicable even when an NF is practically implemented as an Instance (respectively, AMF Instance, SMF Instance, NSSF Instance, etc.).

FIG. 1 illustrates a structure of a wireless communication system according to an embodiment of the disclosure. The system of FIG. 1 shows an example of a configuration of a 5GS (5G system), and the 5GS may include a 5G core network, a base station, and a UE, etc. The 5G core network may include an AMF 120, an SMF 135, a UPF 130, a policy control function (PCF) 140, a user data management (UDM) 145, an NSSF 160, a network data analytics function (NWDAF) 165, a non-3GPP function (N3F), etc.

A user equipment (UE) 100 may access a 5G core network through a base station 110, which is a radio access network (RAN). The base station 110 may support a 3GPP access network (e.g., NR, E-UTRA, etc.) or a Non-3GPP access network (e.g., Wi-Fi, etc.) type. The UE 100 may include a terminal, a mobile station (MS), a cellular phone, a smartphone, a computer, or various devices capable of performing a communication function, and may be connected to the AMF 120 via an N2 interface and to the UPF 130 via an N3 interface through the base station 110. The base station 110 may be referred to as an "access point (AP)," "eNodeB (eNB)," "5th generation node," "gNodeB (gNB)," or other terms having equivalent technical meanings, in addition to the base station. In addition, the base station may be a network entity including at least one of an Integrated Access and Backhaul-donor (IAB-donor), which is a gNB that provides network access to UE(s) through a network of backhaul and access links in a 5G system, and an IAB-node, which is a radio access network (RAN) node that supports NR access link(s) to UE(s) and supports NR backhaul links to the IAB-donor or another IAB-node. The Non-3GPP Function (N3F) is a network function (NF) that operates as an N2 interface and N3 interface termination for the UE 100 connected via a Non-3GPP Access Network (e.g., Wi-Fi, etc.) that is not defined in 3GPP. The N3F may process N2 control plane signaling and N3 user plane packets.

In FIG. 1, the AMF 120 is a network function (NF) that manages wireless network access and mobility for a UE and processes control plane information. The session management function (SMF) 135 is an NF that manages sessions for a UE, and the session information may include QoS information, charging information, information on packet processing, etc. The user plane function (UPF) 130 is an NF that processes user traffic and is controlled by the SMF 135. The policy control function (PCF) 140 is an NF that manages operator policies for providing services in a wireless communication system. The user data management (UDM) 145 is an NF that stores and manages subscription information (UE subscription information) of the UE 100. The unified data repository (UDR) is an NF that stores and manages data. The UDR may store the UE subscription information and provide the UE subscription information to the UDM 145. In addition, the UDR may store the operator policy information and provide the operator policy information to the PCF 140.

The NSSF 160 is an NF that performs a function of selecting network slice(s) (or Network Slice Instance(s)) available to the UE (100) or determining NSSAI. The network data analytics function (NWDAF) 165 is an NF that provides analytics for the operation of the 5G system. The NWDAF 165 may collect data from other NFs or OAM (operations, administration and maintenance) that constitute the 5G system, analyze the collected data, and provide the analysis results to other NFs. The network slice admission control function (NSACF) 180 is an NF that monitors and controls the number of registered UEs and sessions of a network slice that is the target of network slice admission control (NSAC). Configuration information regarding the maximum number of registered UEs and the maximum number of sessions for each network slice is stored in the NSACF 180.

In the 5G system that supports network slicing, network resources suitable for a specific service may be allocated per network slice or per set of network slices. The network slicing may be understood as a technology for logically configuring a network as a set of NFs to support various services having different characteristics, such as broadband communication services, massive IoT, and mission critical services like V2X, while separating different network slices. The network resources may refer to NFs, logical resources provided by the NFs, or wireless resource allocation of a base station. For example, a telecommunications operator may configure network slice A to provide a mobile broadband service, configure network slice B to provide a vehicle communication service, and configure network slice C to provide an IoT service. In this way, the 5G system may efficiently provide the corresponding service to a UE via specialized network slices tailored to the characteristics of each service. In the 5G system, traffic for different network slices may be processed by different protocol data unit (PDU) sessions. The PDU session may refer to an association between a data network providing a PDU connection service and a UE. Therefore, even when communication failure occurs in a network slice, communication in other network slices remains unaffected, enabling the provision of stable communication services.

Hereinafter, for convenience of explanation, the entities exchanging information for access control and state management will be collectively referred to as NF. However, the embodiments of the disclosure are equally applicable even when NF is practically implemented as an Instance (respectively, AMF Instance, SMF Instance, NSSF Instance, etc.).

In the disclosure, an Instance may refer to a specific NF that exists in the form of software code and is in an executable state through allocation of physical and/or logical resources from a computing system to perform the function of NF in a physical computing system, for example, a specific computing system located in a core network. Accordingly, the AMF Instance, SMF Instance, and NSSF Instance may refer to instances which may be allocated physical and/or logical resources from a specific computing system located in the core network to be used to perform operations of the AMF, SMF, or NSSF, respectively. As a result, the AMF Instance, SMF Instance, and NSSF Instance which are allocated physical and/or logical resources from a specific computing system located in a network to be used for AMF, SMF, and NSSF operations may perform the same operation when a physical AMF, SMF, or NSSF device exists. Therefore, in the embodiments of the disclosure, matters described as NF (AMF, SMF, UPF, NSSF, Network Repository Function (NRF)), Service Communication Proxy (SCP), etc.) may be replaced with NF Instances, or conversely, matters described as the NF Instances may be applied by replacing NF Instances with NFs. Likewise, in the embodiments of the disclosure, matters described as Network slices may be replaced with Network slice Instances, or conversely, matters described as Network Slice Instances may be applied by replacing Network Slice Instances with Network slices.

According to an embodiment of the disclosure, in a 5G system defined by 3GPP, one network slice may be referred to as Single-Network Slice Selection Assistance Information (S-NSSAI). The S-NSSAI may be composed of a Slice/Service Type (SST) value and a Slice Differentiator (SD) value. The SST may indicate characteristics of a service supported by the network slice (e.g., enhanced mobile broadband (eMBB), IoT, ultra reliability low latency communication (URLLC), V2X, etc.). The SD may be a value used as an additional identifier for a specific service referred to as the SST.

The NSSAI may include one or more S-NSSAIs. Examples of NSSAI may include Configured NSSAI stored in the UE, Requested NSSAI requested by the UE, Allowed NSSAI authorized for use by the UE 100 as determined by a network function NF (e.g., AMF, NSSF, etc.) of the 5G core network, subscribed NSSAI to which the UE is subscribed, etc., and the types of NSSAI are not limited to the examples above.

The UE 100 may be connected to the base station 110 and registered with the 5G system. For example, the UE 100 may connect to the base station 110 and perform a UE registration procedure with the AMF 120. During the registration procedure, the AMF 120 may determine an allowed NSSAI available to the UE 100 connected to the base station 110 and allocate the same to the UE 100. The UE 100 may select a specific network slice and configure/establish a PDU session for communication with the application function (AF) 170 (e.g., an application server). One PDU session may include one or more QoS Flows, and each QoS Flow may provide different transmission performances required for each application service by configuring different quality of service (QoS) parameters. When the application server located in an external network, the UE 100 may be connected to the application server via the DN 175.

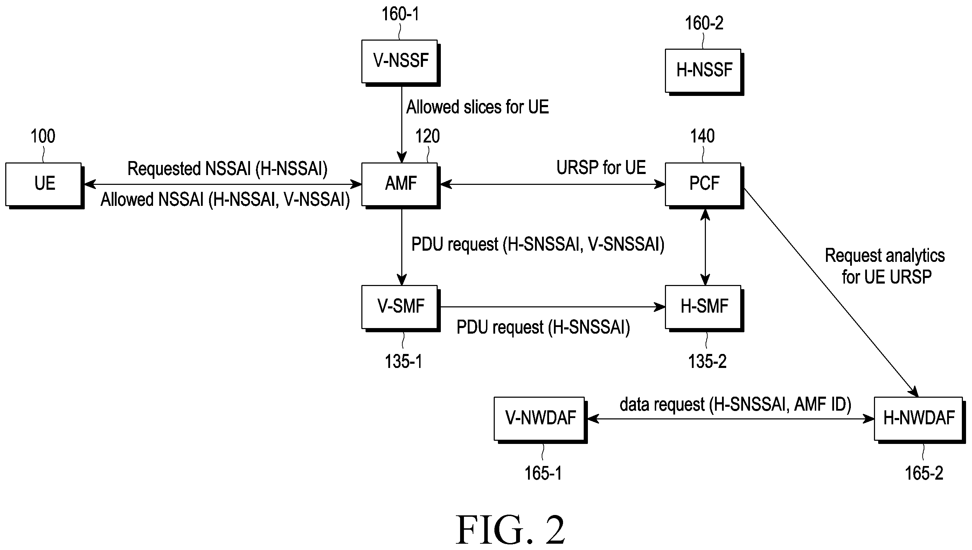

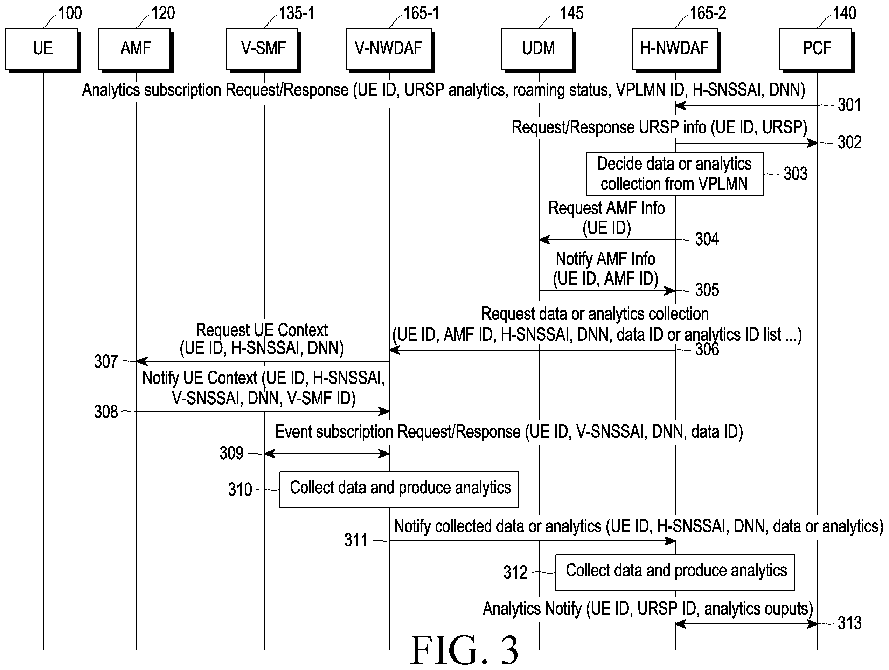

In the embodiments of FIGS. 2 and 3 below, the basic definitions or descriptions of NFs may refer to the description of FIG. 1 described above, and the basic definitions or descriptions of messages transmitted and received between NFs may refer to 3GPP standards TS 23.501 and TS 23.502.

FIG. 2 illustrates an example of a configuration of a wireless communication system that supports a roaming service for a UE that has moved from a home network to a visited network according to an embodiment of the disclosure.

In the example of FIG. 2, the UE 100 is assumed as a roaming UE that moves from a home network (or may be referred to as a Home Public Land Mobile Network (HPLMN)) to a visited network (or may be referred to as a Visited PLMN (VPLMN)) to receive a roaming service. In the example of FIG. 2, "V-" indicated in front of NF indicates a network entity of the visited network, and "H-" indicates a network entity of the home network. In the example of FIG. 2, V-SMF 135-1 and H-SMF 135-2 are SMFs that respectively manage sessions in the visited network and the home network with respect to the UE 100. V-NSSF 160-1 and H-NSSF 160-2 are NSSFs that select/determine network slice(s) (i.e., allowed NSSAI(s)) available to the UE 100 in the visited network and the home network, respectively. In addition, V-NWDAF 165-1 and H-NWDAF 165-2 are NWDAFs that analyze data collected in the visited network and the home network, respectively, and provide the data to other NF(s). The result analyzed via the NWDAF may be delivered to the NF(s) that requested the analysis, and the delivered analysis result may be used for optimization of network management functions such as UE Route Selection Policy (URSP) management, session management, Quality of Service (QoS) guarantee/enhancement, traffic control, mobility management, and load distribution.

The URSP may include rules provided as configuration information to the UE 100, and each rule may be composed of a pair of a traffic descriptor (TD) and a route selection descriptor (RSD). The UE 100 may attempt to transmit traffic matched to a TD (e.g., an application identifier (App ID), a destination IP address, a destination port number, etc.) to a PDU session corresponding to the RSD (e.g., S-NSSAI and/or DNN). When a PDU session corresponding to the RSD exists, the UE 100 may attempt to transmit traffic to the corresponding PDU session, and when no PDU session corresponding to the RSD exists, may request generation of a PDU session corresponding to the RSD.

In addition, a general operation for configuring information in a visited network to support the collection of network data with respect to a roaming UE 100 and transmitting necessary information between the visited network and the home network will be described with reference to FIG. 2.

Describing the general operation of the example presented with reference to FIG. 2, a user may subscribe to a communication service provided by a communication operator to receive wireless communication services.

Referring to FIG. 2, the roaming UE 100 may be connected in a visited network to a base station 110 and register with a 5G system. For example, the UE 100 may perform a UE registration procedure with the AMF 120 via the base station 110. In the registration procedure, the UE 100 may transmit a message including a Requested NSSAI (H-NSSAI), and the AMF 120 may determine an Allowed NSSAI available to the UE 100 via the V-NSSF 160-1 and allocate the same to the UE 100. The UE 100 transmits, to the AMF 120, a request message requesting establishment of a PDU session with respect to the Allowed NSSAI. The request message may include an H-NSSAI and a V-NSSAI corresponding to (mapped to) the H-NSSAI. In the roaming service, the UE 100, AMF 120, and V-SMF 1601 may obtain mapping information of network slices between the home network and the visited network. The AMF 120 that has received the request message for establishing the PDU session transmits a request message for creation of a PDU session including H-SNSSAI (Home-S-NSSAI) and V-SNSSAI (Visited-S-NSSAI) mapped thereto to the V-SMF 135-1. The V-SMF 135-1 of the visited network notifies the H-SMF 135-2 of the home network that a request for creation of a PDU session has been made with respect to the H-NSSAI. Through the process above, the roaming UE 100 may receive a network slice-based service from the visited network. The AMF 120 may receive policy information (URSP) to be applied to the UE 100 from the PCF 140.

In addition, in the disclosure, the telecommunications operator of the home network may collect status data (hereinafter, "network data") from the network and/or the UE 100 via the H-NWDAF 165-2 via the H-NWDAF 165-2 with respect to the corresponding user and the UE 100 used by the user and may use the collected network data to analyze and improve network performance. The telecommunications operator of the home network may, in preparation for the case where the UE 100 roams, determine the network data that may be provided to the visited network with respect to the UE 100 and the type of analysis with respect to the network data, etc., according to operator policies, legal regulations, inter-operator roaming regulations, etc., and select/determine the H-NWDAF 165-2 to be used to transmit the network data and the analytics with respect to the network data (hereinafter, network data and analytics) to the visited network. The telecommunications operator of the home network may configure, in the H-NWDAF 165-2, information (e.g., information on a UE, user data, and analysis type) to provide the network data and analytics determined with respect to the visited network. At this time, the telecommunications operator of the home network may enter into a roaming agreement with telecommunications operators of a plurality of visited networks (hereinafter, roaming operators), and may configure to provide different H-NWDAFs (the example of FIG. 2 illustrates one H-NWDAF for convenience of explanation) and different content of network data and analytics for each visited network of the plurality of visited networks.

The H-NWDAF 165-2 of the home network may register the configuring information of the H-NWDAF 165-2 configured by the telecommunications operator of the home network to the NRF (not shown, may be referred to as H-NRF) of the home network that supports the service search function. The configuration information registered in the H-NRF may include at least one of 1) to 5) below.
1) An indicator indicating whether the H-NWDAF 165-2 supports Roaming,
2) A visited network identifier (PLMN ID),
3) A type of data that may be provided for the visited network (ex. A list of data IDs),
4) Types of analysis that may be provided for the visited network (e.g., a list of analysis IDs), and
5) Information on a service area in which provision of the network data and analytics is allowed with respect to the visited network.

In the disclosure, the NRF (i.e., H-NRF) of the home network may receive, during the roaming, the configuration information related to the provision of information from the H-NWDAF 165-2 and store the configuration information. When the visited network requests, the H-NRF may provide, to the visited network, the configuration information with respect to the H-NWDAF 165-2 that enables the telecommunications operator of the home network to provide the network data and analytics to the roaming operator and/or the roaming UE 100 of the visited network, based on the stored configuration information. Alternatively, as an optional embodiment, whenever the configuration information of the H-NWDAF 165-2 to be used for providing the network data and analytics during roaming is changed according to implementation and roaming agreements between telecommunications operators, the NRF (i.e., H-NRF) of the home network may transmit the configuration information of the H-NWDAF 165-2 to the V-NRF (or Visited PLMN NRF) installed in the visited network (e.g., designated by the telecommunications operator of the visited network). In this case, the V-NRF may store the configuration information of the H-NWDAF 165-2 received from the H-NRF of the home network. Thereafter, when the V-NWDAF 165-1 of the visited network requests the configuration information of the H-NWDAF 165-2 of the home network, which is to be used for requesting the network data and analytics with respect to the roaming UE 100, the V-NRF may provide the configuration information of the H-NWDAF 165-2 stored in the V-NRF to the V-NWDAF 165-1.

In addition, just as the communication operator of the home network configures/registers, in the H-NWDAF 165-2 and/or H-NRF, the configuration information related to the network data and analytics that may be provided for the UE 100 to each roaming operator of the visited networks, the roaming operator may configure/register, in the V-NWDAF 165-1 and/or V-NRF of the visited network, the configuration information related to the network data and analytics that may be provided to the home network for the roaming UE 100.

That is, in preparation for cases where the UE 100 of the communications operator of the home network roams, the roaming operator may determine the configuration information that may be provided to the home network for the UE 100, according to operator policies, legal regulations, inter-operator roaming agreements, etc., and select/determine the V-NWDAF 165-1 to be used for transmitting the network data and analytics to the home network, based on the configuration information to configure/register, in the V-NWDAF and/or V-NRF, the configuration information determined for the home network. At this time, the roaming operator may enter into roaming agreements with telecommunications operators of multiple home networks and may configure to provide different V-NWDAFs (the example of FIG. 2 illustrates one V-NWDAF for convenience of explanation) and different content of network data and analytics for each home network.

The V-NWDAF 165-1 of the visited network may register, in the V-NRF of the visited network that supports the service search function, the configuration information of the V-NWDAF 165-1 configured by the roaming operator. The configuration information registered in the V-NRF may include at least one of a) to e) below.
a) Indicator indicating whether V-NWDAF 165-1 supports Roaming,
b) Network identifier of the home network (PLMN ID),
c) Data types available for the home network (e.g., data ID list),
d) Analysis types available for the home network (e.g., analysis ID list), and
e) Information on a service area in which provision of the data and analytics is allowed with respect to the home operator

The V-NRF of the visited network may receive and store information related to the provision of information during roaming from the V-NWDAF. The V-NRF may, when requested by the home network, provide, to the home network, information on the V-NWDAF, configured by the roaming operator such that data and analytics on the home operator and the roaming UE are provided based on the stored information. Alternatively, whenever the information of the V-NWDAF to be used for the provision of information during roaming is changed according to an implementation and a roaming agreement between operators, the V-NRF may transmit the information of the V-NWDAF to the (H-)NRF (Home PLMN NRF) installed in the home network (designated by the home operator). In this case, the (H-)NRF may store the information of the V-NWDAF received from the V-NRF of the visited network, and when the (H-)NWDAF of the home network requests the V-NWDAF information of the visited network to be used to request data and analytics on the roaming UE at a later stage, the stored information may be provided to the (H-)NWDAF.

When the (H-)NWDAF 165-2 of the home network needs to collect the network data of the roaming UE 100 from the visited network or needs analytics with respect to the roaming UE 100, the (H-)NWDAF 165-2 may request the (H-)NRF so as to receive information on the V-NWDAF 165-1 permitted by the roaming operator, and may utilize the received information to request the V-NWDAF 165-1 to provide the collected network data and analytics on the roaming UE 100 and receive the necessary information. Similarly, when the V-NWDAF 165-1 of the visited network needs to collect network data from the home network on the roaming UE 100 or needs analytics, the V-NWDAF 165-1 may request the V-NRF to receive information about the (H-)NWDAF 165-2 allowed by the home network, and may utilize the received information to request the (H-)NWDAF 165-2 to provide the collected network data and analytics on the roaming UE 100 and receive the necessary information. In the embodiment of FIG. 2, it is also possible to provide at least one of the network data and analytics.

FIG. 3 illustrates a procedure for network data collection and analysis for policy application of a roaming UE in a wireless communication system according to an embodiment of the disclosure.

The example of Fig. 3 assumes that the UE 100 in the example of FIG. 2 is a roaming UE that has moved from a home network (or HPLMN) to a visited network (or VPLMN) and receives a roaming service. The embodiment of FIG. 3 may be applied to the same network structure as the examples of FIGS. 1 and 2.

A general operation of the presented embodiment will be described with reference to FIG. 3. In operation 301, the UE 100, which is subscribed to the home network, initiates communication by accessing the home network via a visited network that has an agreement with the home network. The PCF 140 configured in the home network to provide policy information with respect to the UE 100 may transmit a first request message requesting performance analysis to an H-NWDAF 165-2 of the home network to evaluate and improve service performance according to application of the policy information of the UE 100. The first request message may include an identifier of the UE 100 to request analysis of transmission performance when applying policy information provided by the PCF 140 to the UE 100 in a roaming state, an identifier (analytics ID = URSP analytics) for designating that the type of requested analysis is performance analysis of the URSP, roaming state information of the UE 100, an identifier (Visited PLMN ID or VPLMN ID) of a visited network where the UE 100 is roaming, and information for designating a session of the UE 100 that requires analysis, such as the network slice identifier (Home-S-NSSAI: H-SNSSAI) and the DNN (Data Network Name). In addition, since, as an example, multiple PDU sessions may be established for the UE 100, the request may include multiple network slice identifiers (H-SNSSAI) and DNN (Data Network Name) to designate multiple sessions as sessions requiring analysis, and may include additional indicators for designating specific RAT Type and Access Type and Area of interest (AoI) information for designating specific regions. Although not illustrated, the H-NWDAF 165-2 may transmit, to the PCF 140, a first response message including an indication of whether the first request message is accepted.

In operation 302, the H-NWDAF 165-2 may transmit, to the PCF 140, a second request message requesting the policy information currently configured by the PCF 140 with respect to the UE 100, in order to analyze the transmission performance according to the application of the policy information of the UE 100, requested by the PCF 140. The second request message may include an identifier of the UE 100 and an indicator indicating that the requested information is a URSP of the UE 100. The PCF 140 may transmit, to the H-NWDAF 165-2, a second response message including an indication of whether the second request message is accepted, and the second response message may include an identifier of the UE 100, a URSP configured in the UE, etc.

In operation 303, the H-NWDAF 165-2 may determine the type of network data and/or analysis that needs to be collected to analyze the transmission performance when the URSP is applied to the UE 100. In addition, the H-NWDAF 165-2 may determine the type of network data and/or analysis that needs to be collected from the visited network with respect to the UE 100 in a roaming state.

In operation 304, the H-NWDAF 165-2 may transmit, to the UDM 145, a request message requesting information on the AMF 120 being used in a visited network by the UE 100 in a roaming state. The information on the AMF 120 may be transmitted from the AMF 120 to the UDM 145 and stored in the UDM 145 during the registration procedure in which the UE 100 registers with the home network via the roaming network. In operation 304 above, the request message may include UE identifier information (UE ID) for the UE 100 in a roaming state.

In operation 305, the UDM 145 may transmit, to the H-NWDAF 165-2, a response message including AMF information (e.g., AMF ID) of the visited network connected to the UE 100.

In operation 306, the H-NWDAF 165-2 may transmit a request message requesting the V-NWDAF 165-1 of the visited network to collect/analyze and transmit network data and/or analytics. In operation 306, the request message may include an identifier of the UE 100 (UE ID), an identifier of the AMF 120, DNN information and a network slice identifier (H-SNSSAI) required for collection of session information, a data identifier for designating the type of network data to be collected, analysis identifier information for designating the type of analysis, etc. In this case, the network slice identifier may be H-SNSSAI used in the home network used by the PCF 140 to designate URSP of the UE 100.

In operation 307, the V-NWDAF 165-1 may transmit, to the AMF 120, a request message requesting context information stored with respect to the UE 100, by using the AMF ID and UE ID information included in the request message transmitted by the H-NWDAF 165-2 in operation 306. In operation 307, the request message may include at least one of an identifier of the UE 100 (UE ID), and H-SNSSAI and DNN information used in the home network and designated by the home network where session information needs to be collected.

In operation 308, the AMF 120 may transmit, to the V-NWDAF 165-1, a response message including context information of the UE 100 requested by the V-NWDAF 165-1. In operation 308, the response message may include an identifier of the UE 100 (UE ID), H-SNSSAI used in the home network, and at least one of Visited-S-NSSAI (V-SNSSAI), DNN, and V-SMF identifier (V-SMF ID) which are used in a roaming network corresponding to the H-SNSSAI.

In operation 309, the V-NWDAF 165-1 may transmit a request message to the V-SMF 135-1 to request the collection of network data requested by the H-NWDAF 165-2 in operation 306, by using at least one of the V-SNSSAI, DNN, and V-SMF ID used in the roaming network corresponding to the H-SNSSAI used in the home network, which are received from the AMF 120 in operation 308. In operation 309, the request message may include, with respect to the identifier of the UE 100 (UE ID) designated by the H-NWDAF 165-2, at least one of the V-SNSSAI used in the roaming network, DNN, and a data identifier information for designating the type of network data to be collected. The V-SMF 135-1 may transmit, to the V-NWDAF 165-1, a response message including an indication of whether the request message is accepted in operation 309.

In operation 310, the V-NWDAF 165-1 may perform an operation of collecting network data from the V-SMF 135-1 and generating an analysis result by analyzing the collected network data.

In operation 311, the V-NWDAF 165-1 may transmit, to the H-NWDAF 165-2, a message including network data requested and collected by the H-NWDAF 165-2 and/or an analysis result of analyzing the network data. In operation 311 above, the message may include an identifier of the UE 100 (UE ID), an H-SNSSAI used in the home network to indicate a network slice for which analysis is requested by the H-NWDAF 165-1, DNN, and network data and/or analytics collected with respect to the UE 100 and the H-SNSSAI.

In operation 312, the H-NWDAF 165-2 may analyze network data and/or analytics received from the V-NWDAF 165-1 together with network data collected from the home network and generate the analysis result regarding the perceived transmission performance when the roaming UE 100 applies policy information designated by the PCF 140.

In operation 313, the H-NWDAF 165-2 may transmit, to the PCF 140, a message for reporting the analysis result requested by the PCF 140. In operation 313, the message may include at least one of an identifier of the UE 100 (UE ID) in a roaming state for which the PCF 140 has requested analysis, an identifier (URSP ID) of policy information applied by the UE 100, and information on the transmission performance analysis result when the policy information is applied.

The procedure of FIG. 3 describes an embodiment in which the H-NWDAF 165-2 of the home network receives network data and/or analytics from the V-NWDAF 165-1. However, a case in which the V-NWDAF 165-1 receives network data and/or analytics from the H-NWDAF 165-2 may also be performed in a similar manner to the procedure of FIG. 3.

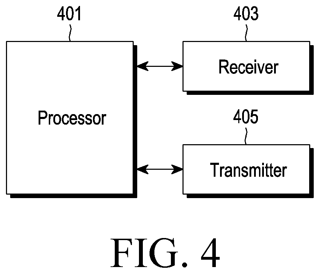

FIG. 4 illustrates an example of a configuration of a network entity in a wireless communication system according to an embodiment of the disclosure.

The network entity of FIG. 4 may be one of the network entities described in the embodiments of FIGS. 1 to 3.

The network entity according to an embodiment of the disclosure may include a processor 401 configured to control the overall operation of the network entity, a transceiver 403 including a transmitter and a receiver, and memory 405. Of course, the disclosure is not limited to the example described above, and the network entity may include more or fewer configurations than the configuration illustrated in FIG. 4.

According to an embodiment of the disclosure, the transceiver 403 may transmit and receive signals to and from at least one of other network entities or UE. The transmitted and received signals may include at least one of control information and data. When the network entity of FIG. 4 is an entity (NF) of a core network, signals transmitted and received between the network entity and a UE may be transmitted and received via an RAN.

According to an embodiment of the disclosure, the processor 401 may control the overall operation of the corresponding network entity such that the network entity performs an operation according to one or a combination of two or more of the embodiments of FIGS. 1 to 3 described above. Meanwhile, the processor 401, the transceiver 403, and the memory 405 are not necessarily implemented as separate modules, but may be integrated into a single component such as a single chip. In addition, the processor 401 may be an application processor (AP), a communication processor (CP), a circuit, an application-specific circuit, or at least one processor. The transceiver 403 may include at least one communication interface for transmitting and receiving signals with other network entities via wired/wireless communication.

According to an embodiment of the disclosure, the memory 405 may store data, such as a basic program, an application program, and configuration information, for the operation of the corresponding network entity. In addition, the memory 405 provides the stored data according to a request from the processor 401. The memory 405 may be configured as a storage medium such as ROM, RAM, a hard disk, a CD-ROM, a DVD, or a combination thereof. In addition, the memory 405 may also include a plurality of memory devices. Furthermore, the processor 401 may perform at least one of the embodiments described above, based on a program stored in the memory 405 for performing an operation according to at least one of the embodiments of the disclosure described above.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

The embodiments of the disclosure described and shown in the specification and the drawings are merely particular examples that have been presented to easily explain the technical contents of the disclosure and help understanding of the disclosure, and are not intended to limit the scope of the disclosure. Therefore, the scope of the disclosure should be construed to include, in addition to the embodiments set forth herein, all changes and modifications derived based on the technical idea of the disclosure. Also, the above respective embodiments may be employed in combination, as necessary.

## Claims

1. A method performed by a first network entity in a wireless communication system supporting a roaming service of a user equipment (UE) from a home network to a visited network, the method comprising:
receiving, from a policy control function (PCF) of the home network, a first request message for collection and analysis of network data related to policy application of the UE;
determining data and an analysis type for collection and analysis of the network data for the UE roaming to the visited network;
transmitting, to a second network entity of the visited network, a second request message requesting collection of the network data and provision of analytics information;
receiving, from the second network entity, the analytics information and the network data collected in relation to the policy application of the UE; and
transmitting the analytics information and the network data to the PCF.

2. The method of claim 1, wherein the first network entity is a home network data analytics function (H-NWDAF) of the home network, and the second network entity is a visited network data analytics function (V-NWDAF) of the visited network.

3. The method of claim 1, wherein the first request message comprises a data network name (DNN) and a network slice identifier (Home-S-NSSAI: H-SNSSAI), the analysis of which is required by the home network.

4. The method of claim 1, wherein the data and analysis type for collection and analysis are determined based on configuration information,
wherein the configuration information comprises at least one of:
an indicator indicating whether the first network entity or the second network entity supports the roaming;
a network identifier (PLMN ID) of the home network or the visited network;
a data type that is available for the home network or the visited network;
an analysis type that is available for the home network or the visited network; and
information on a service area in which provision of data and analytics information is allowed with respect to the home network or the visited network.

5. The method of claim 4, wherein the configuration information is provided from a network repository function (NRF).

6. A first network entity in a wireless communication system supporting a roaming service of a user equipment (UE) from a home network to a visited network, the first network entity comprising:
a transceiver; and
a processor configured to
receive, from a policy control function (PCF) of the home network via the transceiver, a first request message for collection and analysis of network data related to policy application of the UE,
determine data and analysis type for collection and analysis of the network data for the UE roaming to the visited network,
transmit, to a second network entity of the visited network via the transceiver, a second request message requesting collection of the network data and provision of analytics information,
receive, from the second network entity via the transceiver, the analytics information and the network data collected in relation to the policy application of the UE, and
transmit the analytics information and the network data to the PCF via the transceiver.

7. The first network entity of claim 6, wherein the first network entity is a home network data analytics function (H-NWDAF) of the home network, and the second network entity is a visited network data analytics function (V-NWDAF) of the visited network.

8. The first network entity of claim 6, wherein the first request message comprises a data network name (DNN) and a network slice identifier (Home-S-NSSAI: H-SNSSAI), the analysis of which is required by the home network.

9. The first network entity of claim 6, wherein the data and analysis type for collection and analysis are determined based on configuration information, and
wherein the configuration information comprises at least one of:
an indicator indicating whether the first network entity or the second network entity supports the roaming;
a network identifier (PLMN ID) of the home network or the visited network;
a data type that is available for the home network or the visited network;
an analysis type that is available for the home network or the visited network; and
information on a service area in which provision of data and analytics information is allowed with respect to the home network or the visited network.

10. The first network entity of claim 9, wherein the configuration information is provided from a network repository function (NRF).

11. A method performed by a second network entity of a visited network in a wireless communication system supporting a roaming service of a user equipment (UE) from a home network to the visited network, the method comprising:
receiving, from a first network entity that has received a first request message for collection and analysis of network data related to policy application of the UE from a policy control function (PCF) of the home network, a second request message requesting collection of the network data and provision of analytics information; and
in response to receiving the second request message, transmitting, to the first network entity, the analytics information and the network data collected in relation to the policy application of the UE.

12. The method of claim 11, wherein the first network entity is a home network data analytics function (H-NWDAF) of the home network, and the second network entity is a visited network data analytics function (V-NWDAF) of the visited network.

13. The method of claim 11, wherein the first request message comprises a data network name (DNN) and a network slice identifier (Home-S-NSSAI: H-SNSSAI), the analysis of which is required by the home network.

14. A second network entity of a visited network in a wireless communication system supporting a roaming service of a user equipment (UE) from a home network to the visited network, the second network entity comprising:
a transceiver; and
a processor configured to
receive, from a first network entity that has received a first request message for collection and analysis of network data related to policy application of the UE from a policy control function (PCF) of the home network, a second request message requesting collection of the network data and provision of analytics information via the transceiver, and
in response to receiving the second request message, transmit, to the first network entity via the transceiver, the analytics information and the network data collected in relation to the policy application of the UE.

15. The method of claim 14, wherein the first network entity is a home network data analytics function (H-NWDAF) of the home network, and the second network entity is a visited network data analytics function (V-NWDAF) of the visited network.
